# EUROPEAN PATENT SPECIFICATION

(11) **EP 3 168 095 B1**
(45) Date of publication and mention of the grant of the patent: **29.08.2018**
(21) Application number: 16198877.9
(22) Date of filing: 15.11.2016
(51) Int. Cl.: B60S 3/04

(54) **MOTORBIKE WASH AND METHOD FOR WASHING A VEHICLE IN A MOTORBIKE WASH**
MOTORRADWASHANLAGE UND VERFAHREN ZUM WASCHEN EINES FAHRZEUGS IN EINER MOTORRADWASCHANLAGE
INSTALLATION DE LAVAGE DE MOTO ET PROCÉDÉ DE LAVAGE D'UN VÉHICULE DANS UNE INSTALLATION DE LAVAGE DE MOTO

(30) Priority: 16.11.2015 IT UB20155594
(43) Date of publication of application: 17.05.2017
(73) Proprietor: Girgenti, Salvatore, 20831 Seregno (MB) (IT)
(72) Inventor: Girgenti, Salvatore, 20831 Seregno (MB) (IT)
(74) Representative: Porta, Checcacci & Associati S.p.A

(56) References cited:
- EP-A2- 2 006 175
- TW-U- M 420 467
- US-A1- 2009 217 955

## Description

The present invention refers to a motorbike wash, i.e. a station destined for automatically washing motor vehicles or similar, like for example motorcycles (two-wheeled vehicles intended for transporting people), sidecars (three-wheeled vehicles intended for transporting people), motor vehicles for mixed transportation (three-wheeled vehicles intended for transporting people and things), delivery tricars (three-wheeled vehicles intended for transporting things), quad-bikes (motor-driven quadricycle for transporting people).

The invention also refers to a method for washing a vehicle in a motorbike wash.

There is an increasing need to provide motorbike washes that are capable of ensuring the user of the above-mentioned vehicles that they are correctly and effectively washed, without waste and with low environmental impact.

There are known motorbike washes that consist of a washing booth of adequate size for accommodating the motor vehicle that must be washed. Inside the washing booth there is a plurality of nozzles adapted for distributing a pre-washing liquid (for example water and a detergent in the jargon called "midge detergent"), a washing liquid (for example a mixture of water and detergent in the jargon called "bikeshampoo") and a rinsing liquid (for example water).

Such nozzles are supplied by suitable tanks positioned in a technical service space that, usually, develops adjacent to the washing booth and that is divided from it by a wall or dividing partition.

The motorbike washes of the prior art briefly described above are not always efficient in use in particular as far as the recycling of the washing liquid is concerned. Moreover, the motorbike washes of the prior art are subject to frequent interventions of ordinary maintenance.

In addition to the above, the motorbike washes of the prior art are made with structures having predetermined shapes, sizes and arrangements that are difficult to adapt to the specific requirements for use apart from by changing the design from the beginning. Document EP 2 006 175 A2 discloses a motorbike wash according to the preamble of claim 1. In this context, the technical problem at the basis of the present invention is to propose a motorbike wash that is more efficient and able to be usefully used with respect to the motorbike washes of the prior art mentioned above.

In particular, an object of the present invention is to provide a motorbike wash that is capable of more efficiently recycling the washing liquid.

A further object of the present invention is to propose a motorbike wash with more reliable and practically continuous, automatic and autonomous operation, which does not require the pre-mixing of the chemical products used and wherein the interventions of ordinary maintenance are practically cancelled and those of extraordinary maintenance are considerably reduced and such as to require only short interruptions.

Yet another object of the present invention is to propose a flexible motorbike wash capable of adapting to any dimensional requirement of arrangement of the elements constituting the motorbike wash.

The specified technical problem and objects are substantially accomplished by a motorbike wash comprising the technical characteristics recited in one or more of the attached claims.

In particular, the present invention therefore refers, in a first aspect thereof, to a motorbike wash according to claim 1, i.e. a motorbike wash comprising:
- a washing booth for accommodating a motor vehicle to be washed wherein first, second and third distributing nozzles are active for distributing washing liquids, osmotic water with detergent and osmotic water with wax, respectively;
- means for collecting the washing liquids and/or osmotic water with detergent and/or osmotic water with wax distributed by the distributing nozzles comprising a recirculation pump;
- a first tank of accumulation of washing liquids for washing operations in said washing booth, said first tank being intended to be supplied by water network and being in fluid communication with said first distributing nozzles;
- first filtering means;
- a second tank of accumulation of the washing liquids of recirculation from said washing booth, said second tank being supplied by said recirculation pump and being in fluid communication with said first tank upon passage in said first filtering means, whereby said first tank receives the washing liquids coming from said second tank filtered by said first filtering means;
- an osmotization circuit comprising at least one osmotic membrane unit and a third tank of accumulation of osmotic water for deterging and/or waxing and/or rinsing operations in said washing booth, said third tank being in fluid communication with said second and/or third distributing nozzles;
wherein said first tank of accumulation of washing liquids is supplied by water discarded by said at least one osmotic membrane unit of said osmotization circuit.

Advantageously, with the motorbike wash according to the invention, the water that is taken from the water network is completely reused and the volumes of replenishment water are minimised. Furthermore, the number of washes of the motor vehicle with the same amount of water coming from water network are increased and the waste coming from the osmotization circuit is reused for the motor bike wash.

Preferred characteristics of the motorbike wash according to the invention are recited in the dependent claims 2-10. The characteristics of each dependent claim 2-10 can be used individually or in combination with those recited in the other dependent claims.

Preferably, said at least one osmotic membrane unit is intended to be supplied by water network upon passage in second filtering means, such as for example a charcoal filter and/or a plait filter.

Preferably, said osmotization circuit comprises a first pump interposed between said second filtering means and said at least one osmotic membrane unit.

Preferably, said osmotization circuit comprises a second pump placed downstream of said third tank to send osmotic water to said second and/or third distributing nozzles.

Preferably, said osmotization circuit comprises two of said osmotic membrane units placed in series.

Preferably, the motorbike wash according to the invention comprises a third pump placed downstream of said first tank to send washing liquids to said first distributing nozzles.

Preferably, said first filtering means comprise a bag filter and/or an active carbon filter.

Preferably, the motorbike wash according to the invention comprises a fourth pump placed downstream of said second tank to send the washing liquids of recirculation to said first tank, upon passage in said first filtering means.

Preferably, the motorbike wash according to the invention comprises an overfall pipe between first tank and second tank for decanting washing liquids in the second tank.

Preferably, said second tank comprises an overflow fitting for discharge into sewerage system.

Furthermore, in a second aspect thereof, the invention refers to a method for washing a vehicle in a motorbike wash according to claim 11, i.e. a method including the steps of:
- taking washing liquid from a first tank and sending it to a washing booth for washing said vehicle;
- accumulating the washing liquid used in the washing booth and sending it to a second tank;
- filtering at least a part of the used liquid which is present in the second tank through first filtering means and sending it to said first tank;
- generating osmotic water in an osmotization circuit and accumulating it in a third tank;
- deterging and/or waxing and/or rinsing said vehicle in the washing booth with said osmotic water coming from said third tank; and
- sending discard water of the osmotization circuit to the first tank.

With the aforementioned method according to the invention, advantages analogous to those mentioned above with reference to the motorbike wash according to the invention are obtained.

Preferred characteristics of the method according to the invention are recited in the dependent claims 12 and 13. The characteristics of each dependent claim 12 and 13 can be used individually or in combination with those recited in the other dependent claims.

Preferably, said step of generating osmotic water comprises:
- supplying water from water network to at least one osmotic membrane unit, upon filtering thereof in second filtering means.

Preferably, said step of generating osmotic water comprises:
- pumping water in said at least one osmotic membrane unit by means of a first pump interposed between said second filtering means and said at least one osmotic membrane unit.

Further characteristics and advantages of the present invention will become clearer from the following detailed description of preferred embodiments thereof, made with reference to the attached drawings and given for indicating and not limiting purposes. In such drawings:

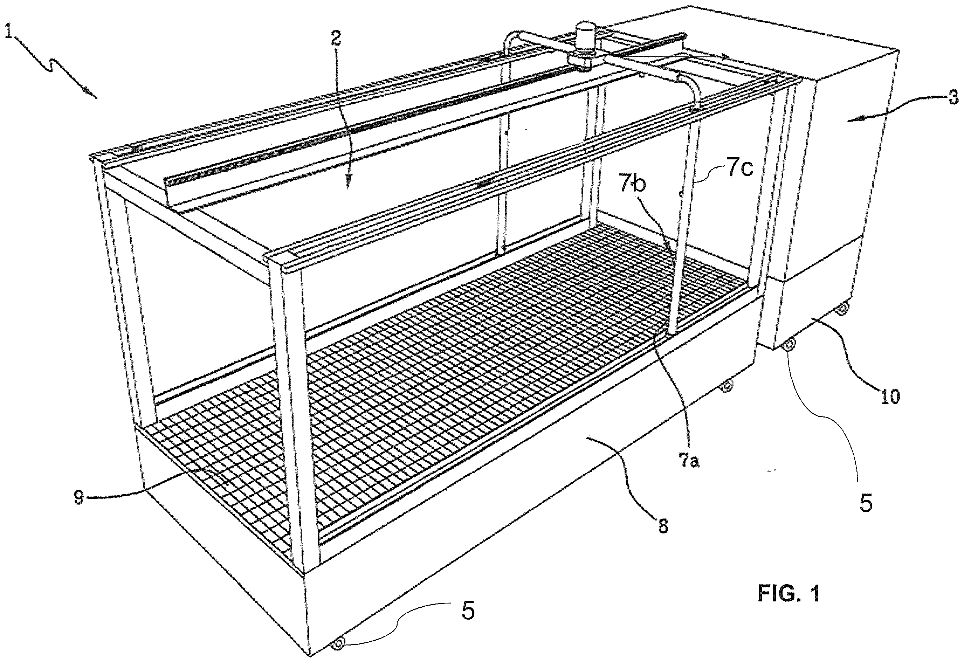

- figure 1 schematically represents a perspective view of a motorbike wash according to the present invention;
- figure 2 represents an operating scheme of the motorbike wash of figure 1;
- figure 3 represents an operating scheme of a first embodiment of an osmotization circuit included in the motorbike wash of figure 1;
- figure 4 represents an operating scheme of a second embodiment of the osmotization circuit included in the motorbike wash of figure 1.

With reference to the attached figures, reference numeral 1 globally indicates a motorbike wash in accordance with the invention.

The motorbike wash 1 comprises a washing booth 2 for accommodating a motor vehicle to be washed through washing liquids and a technical space 3.

There are also means for collecting the washing liquids and/or osmotic water, used during a washing cycle and comprising a recirculation pump P2, preferably an immersion pump.

The recirculation pump P2 can be arranged below the washing booth 2 or in the technical service space 3 adjacent to and in communication with the washing booth 2.

Advantageously, the washing booth 2 is made as a module arranged on wheels 5 for example made as a box-shaped body (or tunnel) adapted for accommodating the motor vehicle while it is washed. The washing booth 2 can also comprise perimetric walls (not illustrated for the sake of clarity of disclosure) and, preferably, an entry section for the motor vehicle that can be opened and closed by a door or shutter (not illustrated in the attached figures for the sake of clarity of representation).

Preferably, the technical service space 3 is distinct from the washing booth 2 and can be positioned in any arrangement and configuration with respect to it.

In particular, the technical service space 3 is made as a module arranged on wheels 5.

The motorbike wash also comprises a first tank V1 of accumulation of washing liquids and a second tank V2 of accumulation of the washing liquids of recirculation connected together through pipes defining a passage path of the washing liquids from the second tank V2 to the first tank V1. The first and the second tank V1, V2 are arranged in the technical space 3.

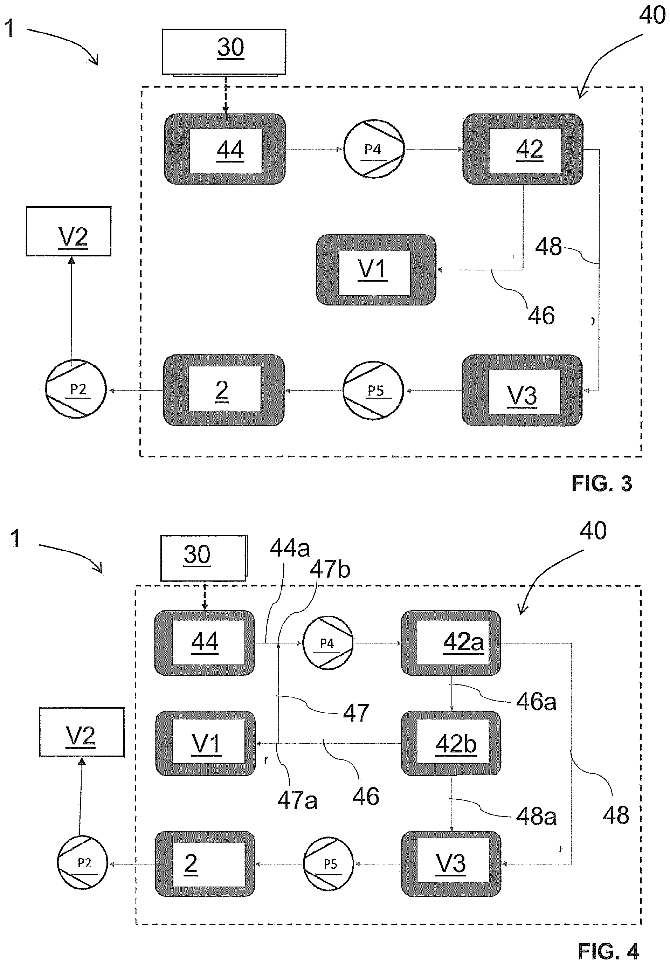

In the washing booth 2 first, second and third distributing nozzles 7a, 7b, 7c are active for distributing washing liquids, osmotic water with detergent and osmotic water with wax, respectively, supplied by the first tank V1 and, respectively, by a third tank V3 of accumulation of osmotic water for deterging and/or waxing and/or rinsing operations (operations carried out with osmotic water and detergent and/or with osmotic water and wax), which is part of an osmotization circuit 40, included in the motorbike wash 1. The osmotization circuit 40 will be described hereinafter with reference to figures 3, 4. The osmotic water can also be indicated as "purified water" or "permeate".

The motorbike wash 1 also comprises means for collecting the washing liquids and/or osmotic water with detergent and/or osmotic water with wax distributed by the distributing nozzles 7a, 7b, 7c. In particular, the motorbike wash 1 comprises a collection tank 8 placed below a support plane 9 for the motor vehicle. The collection tank 8 is in communication with and/or comprises the recirculation pump P2. The collection tank 8 has a capacity such as to collect at least the washing liquids used in a washing cycle. In this way, even in the case of possible malfunctions of the recirculation pump P2, the washing liquids do not come out beyond the level of the collection tank 8.

In order to direct the washing liquids towards the recirculation pump P2 the collection tank 8 can have a bottom wall (not illustrated) arranged inclined with respect to the support plane 9 to make the liquids converge and collect towards the position in which the recirculation pump P2 is active. Alternatively, the collection tank 8 can be distinct from the support plane 9 and arranged inclined below it for example through support feet with differentiated height on the two sides.

In this way, the liquids collected in the tank 8 do not stagnate in it, since they are conveyed directly towards the recirculation pump P2 without the help of any additional device adapted for the purpose.

The recirculation pump P2 can be protected from possible foreign bodies for example through a mechanical filter (not illustrated). The mechanical filter can for example be made through a metallic mesh arranged between the collection tank 8 and a technical service space 3 in which the recirculation pump P2 is active. The metallic mesh is capable of holding foreign bodies, like for example leaves or any other body that may accidentally fall into the tank 8.

The recirculation pump P2 takes the washing liquids used in washing chamber 2 for the recirculation thereof. In particular, the recirculation pump P2 is part of the means for collecting the washing liquids distributed by the distributing nozzles 7a, 7b, 7c.

The liquid taken by the recirculation pump P2 supplies the second tank V2. A pump P3 operates on the washing liquids recirculated in the second tank V2 to send them to the first tank V1, upon relative filtering. Preferably, the pump P3 is an immersion pump arranged in the second tank V2.

Preferably, the capacity of the second tank V2 is greater with respect to the amount of recirculation liquid used during a washing cycle. Moreover, the second tank V2 has a minimum amount of liquid always present inside it. According to a possible embodiment, the second tank V2 has a capacity equal to about 330 litres.

Liquid is thus taken from the second tank V2 to be supplied to the first tank V1.

The first tank V1 is in fluid communication with the distributing nozzles 7a. The second tank V2 receives the dirty washing liquids from the recirculation pump P2, the first tank V1 receives the washing liquids from the second tank V2 upon the relative filtering, and the distributing nozzles 7a receive the filtered washing liquids coming from the first tank V1.

Preferably, the capacity of the first tank V1 is greater than the amount of recirculation liquid used during a washing step. Moreover, the first tank V1 has a minimum amount of liquid always present inside it. According to a possible embodiment, the first tank V1 has a capacity equal to about 330 litres.

The passage from the second tank V2 to the first tank V1 takes place through a path along which the liquid crosses first filtering means 20, arranged between the second tank V2 and the first tank V1 and adapted for cleaning the washing liquids in recirculation.

The first filtering means 20 can comprise at least one bag filter 22 crossed by the washing liquids before reaching the first tank V1. Preferably, a micrometric filter is provided, more preferably two micrometric filters in series having different grain are provided.

The first filtering means 20 can comprise at least one active carbon filter 24 crossed by the washing liquids before reaching the first tank V1.

Preferably, in the passage from the second tank V2 to the first tank V1, the liquid firstly crosses the bag filter(s) 22 and then the active carbon filter 24.

Filtered liquid adapted for being supplied to the distributing nozzles 7a during the washing step is thus taken from the first tank V1.

Preferably, the second tank V2 comprises an overflow fitting 25 for discharge into sewerage system 26.

Figure 3 illustrates a first embodiment of the osmotization circuit 40, comprising the third tank V3 of accumulation of osmotic water for deterging and/or waxing and/or rinsing operations in the washing booth 2 (operations carried out with osmotic water and detergent and/or with osmotic water and wax). The third tank V3 is in fluid communication with and supplies the second and third nozzles 7b, 7c with osmotic water (detergent and/or wax are/is added to the osmotic water). Preferably, the capacity of the further tank 16 is lower than that of the first and second tank V1, V2. According to a possible embodiment, the capacity of the third tank V3 is about 100 litres.

The water coming from water network 30 is subjected to a process such as to make it osmotic water and it is collected in the third tank V3 from which it is sent to the second and third nozzles 7b, 7c (detergent and/or wax are/is added to the osmotic water).

In particular, the osmotization circuit 40 comprises at least one osmotic membrane unit 42 and the third tank V3. In the first embodiment of the osmotization circuit 40 illustrated in figure 3, a single osmotic membrane unit 42 is provided.

The osmotic membrane unit 42 is supplied from the water network 30 upon passage in second filtering means 44, such as for example a charcoal filter and/or a plait filter.

A pump P4 is interposed between the second filtering means 44 and the osmotic membrane unit 42.

The osmotization circuit 40 comprises a pump P5 placed downstream of the third tank V3 to send osmotic water to the second and third distributing nozzles 7b, 7c (detergent and/or wax are/is added to the osmotic water).

In accordance with the invention, the first tank V1 is supplied by water discarded by the osmotic membrane unit 42 of the osmotization circuit 40, thanks to suitable pipe 46.

The osmotic water generated by the first osmotic membrane unit 42 is sent to the tank V3, thanks to suitable pipe 48.

Figure 4 illustrates a second embodiment of the osmotization circuit 40, comprising a pair of osmotic membrane units 42a, 42b. The two osmotic membrane units 42a, 42b are arranged in series.

In particular, the water discarded by the first osmotic membrane unit 42a is sent to the second osmotic membrane unit 42b, thanks to suitable pipe 46a.

The osmotic water generated by the first osmotic membrane unit 42a is sent to the tank V3, thanks to suitable pipe 48.

The first tank V1 is supplied by water discarded by the second osmotic membrane unit 42b, thanks to suitable pipe 46.

A pipe 47 of recirculation of the discarded water towards the pump P4 comes out onto the pipe 46. The pipe 47 is selectively opened by suitable valves, preferably arranged at the junction 47a of the pipe 47 on the pipe 46 and at the junction 47b of the pipe 47 on the pipe 44a of connection between the second filtering means 44 and the pump P4.

The osmotic water generated by the second osmotic membrane unit 42b is sent to the tank V3, thanks to suitable pipe 48a.

All of the water used in a washing cycle is pushed by the recirculation pump P2 and reused in the following cycle together with the washing one as described above.

When the maximum level of the second tank V2 exceeds the overflow threshold due to the level increase given by the recirculation of the osmotic water, the excess liquid is discharged through the overflow fitting 25.

In accordance with a possible embodiment, the first tank V1, the second tank V2 and the third tank V3 are placed side by side and are preferably arranged in the technical service space 3. The technical service space 3 containing at least the first tank V1, the second tank V2, the first filtering means 20 and the third tank V3 is distinct from the washing booth 2 and can be positioned in any arrangement and configuration with respect to it. Preferably, the washing booth 2 and the technical service space 3 are made as independent modules comprising hydraulic and electrical connections for the connection to one another and to the water network 30.

With reference to a washing cycle, at the beginning the second tank V2 comprises a minimum amount of liquid and the first tank V1 comprises a maximum amount of liquid. During the washing cycle, the second tank V2 comprises a maximum amount of liquid and the first tank V1 comprises a minimum amount of liquid. At the end of the washing cycle the first tank V1 and the second tank V2 go back to the initial conditions.

With reference to the ordinary use of the motorbike wash 1, the distributing nozzles 7a, the recirculation pump P2, the first and second tank V1, V2 define a substantially closed circuit. The first and second tank V1, V2 are connected in series by the path along which the first filtering means 20 are arranged.

Water is taken from the water network 30 in two ways.

A first way is that of filling the tank V1 of accumulation of the clean water. This operation takes place a first time when the motorbike wash 1 is installed and then does not take place again thanks to a replenishment of water coming both from the tank V2 and from the osmotization circuit 40. The volume of water used on average for one complete washing cycle is about 273 litres. Such water is completely recycled, not considering the losses that occur in any case in each wash due to evaporation.

A second way is that of the supplying of the osmotization circuit 40. In particular, the water of the water network 30, after filtering in the second filtering means 44 (charcoal filter and/or plait filter), is brought to about 11-12 bar by the pump P4 that supplies the osmotic membrane unit 42. For example, the osmotization system currently installed produces about 3.5 litres of osmotic water and about 3.5 litres of discard water (water discarded by the osmotic membrane unit 42, 42a or 42b). The discard water is not sent into the sewerage system 26, but rather is sent to the tank V1. The osmotic water, on the other hand, is accumulated in the tank V3 and used for the deterging and/or waxing and/or final rinsing step (detergent and/or wax are/is added to the osmotic water). As an example, there is an average consumption of about 23 litres of osmotic water for each wash of a motor vehicle.

Preferably, the tanks V1 and V2 are parts of a single two-stage tank. More preferably, the two-stage tank is made of stainless steel.

The first stage, i.e. the tank V1, is filled at the moment of the installation of the motorbike wash with a taking from the water network 30, but in general it does not need other subsequent takings, since the replenishment takes place with the water discarded by the osmotization circuit 40 and by the recirculation from the tank V2. From this first stage (tank V1) the washing liquid used in washing booth 2 is taken for all of the washing operations, with the exception of the deterging and/or waxing and/or rinsing operation, for which the osmotic water is used (detergent and/or wax are/is added to the osmotic water).

The second stage, i.e. the tank V2, is supplied through the recirculation pump P2 that sends the dirty liquid accumulated in washing booth 2 into this tank V2. The liquid sent to this tank V2 is all of that used in washing booth 2, therefore also comprises the osmotic water used for deterging and/or waxing and/or rinsing (detergent and/or wax are/is found added in the osmotic water). The overflow fitting 25 connects this tank V2 with the sewerage system 26 and an overfall pipe 27 allows the excess liquid in the tank V1 to pour into the tank V2.

The osmotic water is accumulated in the tank V3, which is a dedicated tank from which it is taken and sent to the washing booth 2. The osmotization circuit 40 is controlled by electromagnetic valve(s).

Basically, an overall circuit of the washing liquids/osmotic water comprises two lines: a washing liquid line and an osmotic water line.

When the system is started, the water taken from the water network 30 (for example about 600 litres) is sent to the tank V1 and also to the tank V2. This operation only takes place when the motorbike wash 1 is started and in a totally automatic manner thanks to the level control with which the motorbike wash 1 is provided.

For example, every 15 days an automatic counter-washing of the active carbon filters 24 is provided using the same depurated water which is present in the two-stage tank and thus creating a partial replacement of the water. For example, about 400 litres of water of water network 30 are loaded into the tank V1 and through the overflow fitting 25 of the tank V2 an equivalent amount of dirty water is discharged into sewerage system 26.

The washing liquid is taken exclusively from the tank V1 and sent to the washing booth 2 through the pump P1, for example at a pressure of about 10 bar. The dirty washing liquid is accumulated on the bottom of the washing booth 2, taken through a recirculation pump P2 and sent to the tank V2.

The pump P3 operates for example at about 1.5 - 2.0 bar, takes the liquid from the tank V2 and sends it to a bag filter 22, preferably made of nylon (having average port of about 50 µm), and then to an active carbon filter 24. The liquid thus filtered is sent to the tank V1.

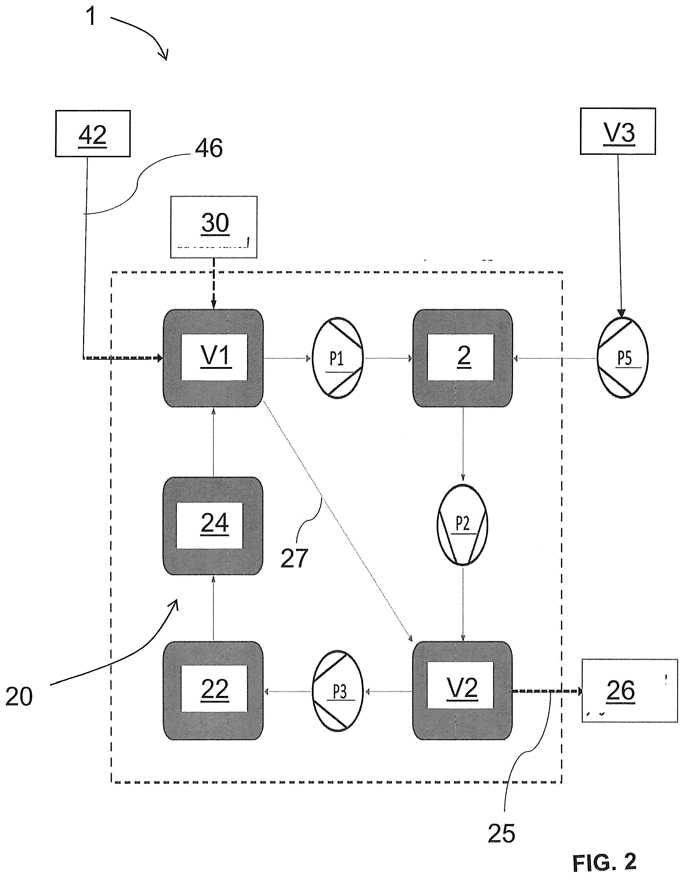

The tank V1 allows decanting of clean water into the tank V2 through the overfall pipe 27. The overflow fitting 25, on the other hand, allows the possible excess liquid in the tank V2 to be discharged directly into sewerage system 26. In this way, the washing water line operates practically in closed ring, with a partial replenishment coming only from the osmotization circuit 40 (figure 2).

The osmotic membrane unit 42, on the other hand, is supplied only by water taken from the water network 30 and filtered through a charcoal filter and/or a plait filter. The pump P4 sends it under pressure to the osmotization circuit 40. The osmotic water is accumulated in the tank V3, whereas the discard water of the osmotization circuit 40 is sent to the tank V1. The osmotic water is taken from the tank V3 and sent to the washing chamber 2 through the pump P5.

In order to ensure the deterging and/or waxing and/or rinsing operations with osmotic water (detergent and/or wax are/is added to the osmotic water) also in case of inadequacy of osmotic water in the tank V3, there is the possibility of conveying the discard water of the osmotization circuit 40 into the tank V3. This operation is manual and is to be carried out only in case of need. As such, it is not considered in the evaluation of the water consumption in the normal operating procedures. The osmotic water line takes water from the water network 30, but never discharges water into sewerage system 26. Indeed, the osmotic water line closes on the washing liquid line (figures 3, 4).

In the embodiment of the osmotization circuit 40 illustrated in figure 4, two osmotic membrane units 42a, 42b are used instead of just one like in the embodiment of the osmotization circuit 40 illustrated in figure 3. The discard water produced in the first osmotic membrane unit 42a is sent into the second osmotic membrane unit 42b from which new permeate is produced with a substantial reduction of the waste, which in any case is not sent into sewerage system 26, but is sent to the tank V1, being water that is in any case clean. For example, the pump P4 supplies about 600 litres/hour of water at about 12 bar to the first osmotic membrane unit 42. The first osmotic membrane unit 42a produces about 110 litres/hour of permeate that is sent to the tank V3. The discard water, on the other hand, is sent to the second osmotic membrane unit 42b that produces about other 90 litres/hour of permeate, which is likewise sent to the tank V3. The roughly 400 litres/hour of discard water are in part recovered in the osmotization circuit 40 and only about 200 litres/hour are sent into the tank V1 (figure 4).

The following components of the motorbike wash 1 can for example have the technical characteristics indicated below:
- pump P1 having head of about 149-105 metres of water column;
- recirculation pump P2 having head of about 9-1.8 metres of water column;
- pump P3 having flow rate of about 140 litres/hour at 2 bar;
- pump P4 having flow rate of about 600 litres/hour at 12 bar;
- pump P5 having head of about 54-16.8 metres of water column;
- active carbon filter 24 having capacity of 50 litres;
- washing booth 2 having capacity 310 litres.

The motorbike wash 1 carries out a washing process that generally comprises the following steps of:
i) deterging, for example for 60 seconds, followed by an optional pause for example of 30 seconds;
ii) rinsing, for example for 80 seconds;
iii) waxing, for example for 60 seconds, followed by an optional pause for example of 30 seconds;
iv) drying, for example for 270 seconds (with two passes, outward and return);
v) rim-washing, for example for 60 seconds.

The rim-washing step is optional and is manually carried out by the operator before starting the automatic operations.

A standard motorbike wash cycle, comprising steps i)-iv), has for example a total duration of 8 minutes and 20 seconds. The duration can of course be adjusted.

In step i) and v) a detergent is used. In step iii) wax is used.

As an example:
- in step i) an amount of 83 grams/minute of detergent and 3 litres of water are used;
- in step ii) 250 litres of water are used;
- in step iii) an amount of 16.6 grams/minute of detergent and 20 litres of water are used;
- in step v) an amount of 83 grams/minute of detergent and 1 litre of water are used.

The management of the water in the motorbike wash 1 according to the invention is optimised so as to completely reuse the water and minimise what is taken from the water network 30. Indeed, the volumes of replenishment water are minimised, the number of motorcycle washes is increased and the waste coming from the osmotization circuit is reused for washing motorcycles and minimised.

The motorbike wash 1 according to the present invention has a practically automatic ordinary operation and does not require ordinary maintenance interventions. The only required interventions need for the service to be interrupted for a very short time and have a very low frequency (once or twice per year). Such extraordinary interventions can comprise cleaning the tanks V1-V3 that can advantageously comprise manual taps to discharge possible residues in a discharge container.

Advantageously, the active carbon filter 24 can also comprise means of connection to a discharge container for discharging possible residues removed with local counter-washing operations on the filter 24 itself. The extraordinary interventions can also comprise the cleaning and/or the replacement of both the micrometric 22 and active carbon 24 filters.

The motorbike wash 1 according to the present invention is extremely efficient and versatile.

In particular, the recirculation of the washing liquids is effective thanks to the presence of the two tanks V1, V2 connected together and of the interposed filtering means 20.

Moreover, the operation is practically continuous, automatic and autonomous, without the need to pre-mix the used chemical products.

Moreover, the use of modules which are separate and arranged on wheels allows the motorbike wash to adapt to any dimensional and/or arrangement requirement of the elements constituting the motorbike wash itself.

Finally, the motorbike wash is safe since it is substantially a closed circuit that discharges only limited amounts of liquids into the sewerage system 26, which in any case are recycled and thus cleaned whereas the residues are collected sporadically and sent to suitable landfills.

In order to satisfy specific and contingent requirements, those skilled in the art can bring numerous modifications and variants to the motorbike wash and the method for washing a vehicle in a motorbike wash described above with reference to the figures, all of which are in any case covered by the scope of protection of the present invention as defined by the following claims.

## Claims

1. Motorbike wash (1) comprising:
- a washing booth (2) for accommodating a motor vehicle to be washed wherein first, second and third distributing nozzles (7a, 7b, 7c) are active for distributing washing liquids, osmotic water with detergent and osmotic water with wax, respectively;
- means for collecting the washing liquids and/or osmotic water with detergent and/or osmotic water with wax distributed by the distributing nozzles (7a, 7b, 7c) comprising a recirculation pump (P2);
- a first tank (V1) of accumulation of washing liquids for washing operations in said washing booth (2), said first tank (V1) being intended to be supplied by water network (30) and being in fluid communication with said first distributing nozzles (7a);
- first filtering means (20); **characterized in that** the motorbike wash (1) further comprises:
- a second tank (V2) of accumulation of the washing liquids of recirculation from said washing booth (2), said second tank (V2) being supplied by said recirculation pump (P2) and being in fluid communication with said first tank (V1) upon passage in said first filtering means (20), whereby said first tank (V1) receives the washing liquids coming from said second tank (V2) filtered by said first filtering means (20);
- an osmotization circuit (40) comprising at least one osmotic membrane unit (42, 42a, 42b) and a third tank (V3) of accumulation of osmotic water for deterging and/or waxing and/or rinsing operations in said washing booth (2), said third tank (V3) being in fluid communication with said second and/or third distributing nozzles (7b, 7c);
wherein said first tank (V1) of accumulation of washing liquids is supplied by water discarded by said at least one osmotic membrane unit (42, 42a, 42b) of said osmotization circuit.

2. Motorbike wash (1) according to claim 1, wherein said at least one osmotic membrane unit (42, 42a, 42b) is intended to be supplied by water network (30) upon passage in second filtering means (44), such as for example a charcoal filter and/or a plait filter.

3. Motorbike wash (1) according to claim 2, wherein said osmotization circuit (40) comprises a first pump (P4) interposed between said second filtering means (44) and said at least one osmotic membrane unit (42, 42a).

4. Motorbike wash (1) according to any one of the preceding claims, wherein said osmotization circuit (40) comprises a second pump (P5) placed downstream of said third tank (V3) to send osmotic water to said second and/or third distributing nozzles (7b, 7c).

5. Motorbike wash (1) according to any one of the preceding claims, wherein said osmotization circuit (40) comprises two of said osmotic membrane units (42a, 42b) placed in series.

6. Motorbike wash (1) according to any one of the preceding claims, comprising a third pump (P1) placed downstream of said first tank (V1) to send washing liquids to said first distributing nozzles (7a).

7. Motorbike wash (1) according to any one of the preceding claims, wherein said first filtering means (20) comprise a bag filter (22) and/or an active carbon filter (24).

8. Motorbike wash (1) according to any one of the preceding claims, comprising a fourth pump (P3) placed downstream of said second tank (V2) to send the washing liquids of recirculation to said first tank (V1), upon passage in said first filtering means (20).

9. Motorbike wash (1) according to any one of the preceding claims, comprising an overfall pipe (27) between the first tank (V1) and second tank (V2) for decanting washing liquids in the second tank (V2).

10. Motorbike wash (1) according to any one of the preceding claims, wherein said second tank (V2) comprises an overflow fitting (25) for discharge into sewerage system (26).

11. Method for washing a vehicle in a motorbike wash (1), including the steps of:
- taking washing liquid from a first tank (V1) and sending it to a washing booth (2) for washing said vehicle;
- accumulating the washing liquid used in the washing booth (2) and sending it to a second tank (V2);
- filtering at least a part of the used liquid which is present in the second tank through first filtering means (20) and sending it to said first tank (V1);
- generating osmotic water in an osmotization circuit (40) and accumulating it in a third tank (V3);
- deterging and/or waxing and/or rinsing said vehicle in the washing booth (2) with said osmotic water coming from said third tank (V3); and
- sending discard water of the osmotization circuit (40) to the first tank (V1).

12. Method according to claim 11, wherein said step of generating osmotic water comprises:
- supplying water from water network (30) to at least one osmotic membrane unit (42, 42a, 42b), upon filtering thereof in second filtering means (44).

13. Method according to claim 12, wherein said step of generating osmotic water comprises:
- pumping water in said at least one osmotic membrane unit (42, 42a, 42b) by means of a first pump (P4) interposed between said second filtering means (44) and said at least one osmotic membrane unit (42, 42a).

## Patentansprüche

1. Motorradwaschanlage (1) umfassend:
- eine Waschkabine (2) zur Aufnahme eines zu waschenden Kraftfahrzeugs, wobei erste, zweite und dritte Verteilerdüsen (7a, 7b, 7c) aktiv sind, um jeweils Waschflüssigkeiten, osmotisches Wasser mit Reinigungsmittel und osmotisches Wasser mit Wachs zu verteilen;
- Mittel zum Sammeln von Waschflüssigkeiten und/oder osmotischem Wasser mit Reinigungsmittel und/oder osmotischem Wasser mit Wachs, die durch die Verteilerdüsen (7a, 7b, 7c) verteilt werden, umfassend eine Rezirkulationspumpe (P2);
- einen ersten Tank (V1) zum Ansammeln von Waschflüssigkeiten für die Waschvorgänge in der Waschkabine (2), wobei der erste Tank (V1) dazu bestimmt ist, durch das Wassernetz (30) versorgt zu werden und in fluidischer Verbindung mit den ersten Verteilerdüsen (7a) steht;
- erste Filtermittel (20);
**dadurch gekennzeichnet, dass** die Motorradwaschanlage (1) weiter Folgendes umfasst:
- einen zweiten Tank (V2) zum Ansammeln der Waschflüssigkeiten der Rezirkulation aus der Waschkabine (2), wobei der zweite Tank (V2) durch die Rezirkulationspumpe (P2) versorgt wird und nach Durchlauf durch die ersten Filtermittel (20) in fluidischer Verbindung mit dem ersten Tank (V1) steht, wobei der erste Tank (V1) die aus dem zweiten Tank (V2) stammenden Waschflüssigkeiten aufnimmt, die von den ersten Filtermitteln (20) gefiltert werden;
- einen Osmotisierungskreislauf (40), umfassend wenigstens eine osmotische Membraneinheit (42, 42a, 42b) und einen dritten Tank (V3) zum Ansammeln des osmotischen Wassers für die Wasch-und/oder Wachs- und/oder Spülvorgänge in der Waschkabine (2), wobei der dritte Tank (V3) in fluidischer Verbindung mit den zweiten und/oder dritten Verteilerdüsen (7b, 7c) steht;
wobei dem ersten Tank (V1) zum Ansammeln der Waschflüssigkeiten das Wasser zugeführt wird, das aus der wenigstens einen osmotischen Membraneinheit (42, 42a, 42b) des Osmotisierungskreislaufs entsorgt wurde.

2. Motorradwaschanlage (1) nach Anspruch 1, wobei die wenigstens eine osmotische Membraneinheit (42, 42a, 42b) dazu bestimmt ist, durch das Wassernetz (30) versorgt zu werden, nach Durchlauf durch zweite Filtermittel (44), wie beispielsweise ein Kohlefilter oder ein Zopffilter.

3. Motorradwaschanlage (1) nach Anspruch 2, wobei der Osmotisierungskreislauf (40) eine erste Pumpe (P4) umfasst, die zwischen den zweiten Filtermitteln (44) und der wenigstens einen osmotischen Membraneinheit (42, 42a) angeordnet ist.

4. Motorradwaschanlage (1) nach einem der vorhergehenden Ansprüche, wobei der Osmotisierungskreislauf (40) eine zweite Pumpe (P5) umfasst, die stromabwärts des dritten Tanks (V3) angeordnet ist, um osmotisches Wasser den zweiten und/oder dritten Verteilerdüsen (7b, 7c) zuzuführen.

5. Motorradwaschanlage (1) nach einem der vorhergehenden Ansprüche, wobei der Osmotisierungskreislauf (40) zwei der hintereinander angeordneten osmotischen Membraneinheiten (42a, 42b) umfasst.

6. Motorradwaschanlage (1) nach einem der vorhergehenden Ansprüche, umfassend eine dritte Pumpe (P1), die stromabwärts des ersten Tanks (V1) angeordnet ist, um die Waschflüssigkeiten den ersten Verteilerdüsen (7a) zuzuführen.

7. Motorradwaschanlage (1) nach einem der vorhergehenden Ansprüche, wobei die ersten Filtermittel (20) einen Schlauchfilter (22) und/oder einen Aktivkohlefilter (24) umfassen.

8. Motorradwaschanlage (1) nach einem der vorhergehenden Ansprüche, umfassend eine vierte Pumpe (P3), die stromabwärts des zweiten Tanks (V2) angeordnet ist, um die Waschflüssigkeiten der Rezirkulation nach Durchlauf durch die ersten Filtermittel (20) dem ersten Tank (V1) zuzuführen.

9. Motorradwaschanlage (1) nach einem der vorhergehenden Ansprüche, umfassend ein Überlaufrohr (27) zwischen dem ersten Tank (V1) und dem zweiten Tank (V2) zum Dekantieren der Waschflüssigkeiten in dem zweiten Tank (V2).

10. Motorradwaschanlage (1) nach einem der vorhergehenden Ansprüche, wobei der zweite Tank (V2) eine Überlaufarmatur (25) zum Ablassen in das Abwassernetz (26) umfasst.

11. Verfahren zum Waschen eines Fahrzeugs in einer Motorradwaschanlage (1), das die folgenden Schritte aufweist:
- Entnehmen von Waschflüssigkeit aus einem ersten Tank (V1) und Zuführen derselben in eine Waschkabine (2) zum Waschen des Fahrzeugs;
- Ansammeln der in der Waschkabine (2) verwendeten Waschflüssigkeit und Zuführen derselben in einen zweiten Tank (V2);
- Filtern des wenigstens einen Teils der verwendeten, in dem zweiten Tank enthaltenen Flüssigkeit durch die ersten Filtermittel (20) und Zuführen derselben in den ersten Tank (V1);
- Erzeugen von osmotischem Wasser in einem Osmotisierungskreislauf (40) und Ansammeln desselben in einem dritten Tank (V3);
- Waschen und/oder Wachsen und/oder Spülen des Fahrzeugs in der
Waschkabine (2) mit dem osmotischen Wasser, das aus dem dritten Tank (V3) stammt; und
- Zuführen des Restwassers des Osmotisierungskreislaufs (40) in den ersten Tank (V1).

12. Verfahren nach Anspruch 11, wobei der Schritt des Erzeugens von osmotischem Wasser Folgendes umfasst:
- Zuführen von Wasser aus dem Wassernetz (30) in wenigstens eine osmotische Membraneinheit (42, 42a, 42b), nach Filtern desselben in zweiten Filtermitteln (44).

13. Verfahren nach Anspruch 12, wobei der Schritt des Erzeugens von osmotischem Wasser Folgendes umfasst:
- Pumpen von Wasser in die wenigstens eine osmotische Membraneinheit (42, 42a, 42b) mittels einer ersten Pumpe (P4), die zwischen den zweiten Filtermitteln (44) und der wenigstens einen osmotischen Membraneinheit (42, 42a) angeordnet ist.

## Revendications

1. Installation de lavage de moto (1) comprenant :
- une cabine de lavage (2) pour loger un véhicule à moteur à laver, dans laquelle des premières, deuxièmes et troisièmes buses de distribution (7a, 7b, 7c) sont actives pour distribuer respectivement des liquides de lavage, de l'eau osmotique avec un détergent et de l'eau osmotique avec une cire ;
- des moyens pour collecter les liquides de lavage et/ou l'eau osmotique avec du détergent et/ou l'eau osmotique avec la cire distribués par les buses de distribution (7a, 7b, 7c), comprenant une pompe de recirculation (P2) ;
- un premier réservoir (V1) d'accumulation de liquides de lavage pour des opérations de lavage dans ladite cabine de lavage (2), ledit premier réservoir (V1) étant destiné à être alimenté par un réseau d'eau (30) et étant en communication de fluide avec lesdites premières buses de distribution (7a) ;
- des premiers moyens de filtrage (20) ;
**caractérisée en ce que** l'installation de lavage de moto (1) comprend en outre :
- un deuxième réservoir (V2) d'accumulation des liquides de lavage de recirculation provenant de ladite cabine de lavage (2), ledit deuxième réservoir (V2) étant alimenté par ladite pompe de recirculation (P2) et étant en communication de fluide avec ledit premier réservoir (V1) lors du passage dans lesdits premiers moyens de filtrage (20), moyennant quoi ledit premier réservoir (V1) reçoit les liquides de lavage arrivant dudit deuxième réservoir (V2) filtrés par lesdits premiers moyens de filtrage (20) ;
- un circuit de traitement osmotique (40) comprenant au moins une unité de membrane osmotique (42, 42a, 42b) et un troisième réservoir (V3) d'accumulation d'eau osmotique pour des opérations de nettoyage au détergent et/ou de cirage et/ou de rinçage dans ladite cabine de lavage (2), ledit troisième réservoir (V3) étant en communication de fluide avec lesdites deuxièmes et/ou troisièmes buses de distribution (7b, 7c) ;
dans laquelle ledit premier réservoir (V1) d'accumulation de liquides de lavage est alimenté par de l'eau rejetée par ladite au moins une unité de membrane osmotique (42, 42a, 42b) dudit circuit de traitement osmotique.

2. Installation de lavage de moto (1) selon la revendication 1, dans laquelle ladite au moins une unité de membrane osmotique (42, 42a, 42b) est destinée à être alimentée par un réseau d'eau (30) lors du passage dans des deuxièmes moyens de filtrage (44), tels que par exemple un filtre à charbon et/ou un filtre à tresse.

3. Installation de lavage de moto (1) selon la revendication 2, dans laquelle ledit circuit de traitement osmotique (40) comprend une première pompe (P4) interposée entre lesdits deuxièmes moyens de filtrage (44) et ladite au moins une unité de membrane osmotique (42, 42a).

4. Installation de lavage de moto (1) selon l'une quelconque des revendications précédentes, dans laquelle ledit circuit de traitement osmotique (40) comprend une deuxième pompe (P5) placée en aval dudit troisième réservoir (V3) pour envoyer l'eau osmotique auxdites premières et/ou troisièmes buses de distribution (7b, 7c).

5. Installation de lavage de moto (1) selon l'une quelconque des revendications précédentes, dans laquelle ledit circuit de traitement osmotique (40) comprend deux desdites unités de membrane osmotique (42a, 42b) placées en série.

6. Installation de lavage de moto (1) selon l'une quelconque des revendications précédentes, comprenant une troisième pompe (P1) placée en aval dudit premier réservoir (V1) pour envoyer les liquides de lavage auxdites premières buses de distribution (7a).

7. Installation de lavage de moto (1) selon l'une quelconque des revendications précédentes, dans laquelle lesdits premiers moyens de filtrage (20) comprennent un sac filtrant (22) et/ou un filtre à charbon actif (24).

8. Installation de lavage de moto (1) selon l'une quelconque des revendications précédentes, comprenant une quatrième pompe (P3) placée en aval dudit deuxième réservoir (V2) pour envoyer les liquides de lavage de recirculation audit premier réservoir (V1), lors du passage dans lesdits premiers moyens de filtrage (20).

9. Installation de lavage de moto (1) selon l'une quelconque des revendications précédentes, comprenant un tube de trop-plein (27) entre le premier réservoir (V1) et le deuxième réservoir (V2) pour la décantation des liquides de lavage dans ledit deuxième réservoir (V2).

10. Installation de lavage de moto (1) selon l'une quelconque des revendications précédentes, dans laquelle ledit deuxième réservoir (V2) comprises un raccord de trop-plein (25) pour la décharge dans un système d'égouts (26).

11. Procédé de lavage d'un véhicule dans une installation de lavage de moto (1), comprenant les étapes suivantes :
- le prélèvement d'un liquide à partir d'un premier réservoir (V1) et l'envoi à une cabine de lavage (2) pour laver ledit véhicule ;
- l'accumulation du liquide de lavage utilisé dans la cabine de lavage (2) et son envoi à un deuxième réservoir (V2) ;
- le filtrage d'au moins une partie du liquide utilisé qui est présent dans le deuxième réservoir à travers des premiers moyens de filtrage (20) et son envoi audit premier réservoir (V1) ;
- la génération d'eau osmotique dans un circuit de traitement osmotique (40) et son accumulation dans un troisième réservoir (V3) ;
- le nettoyage au détergent et/ou le cirage et/ou le rinçage dudit véhicule dans la cabine de lavage (2) avec ladite eau osmotique provenant dudit troisième réservoir (V3) ; et
- l'envoi de l'eau de rejet du circuit de traitement osmotique (40) au premier réservoir (V1).

12. Procédé selon la revendication 11, dans lequel ladite étape de génération d'eau osmotique comprend :
- l'alimentation en eau à partir d'un réseau d'eau (30) vers au moins une unité de membrane osmotique (42, 42a, 42b), lors du filtrage de celle-ci dans des deuxièmes moyens de filtrage (44).

13. Procédé selon la revendication 12, dans lequel ladite étape de génération d'eau osmotique comprend :
- le pompage d'eau dans ladite au moins une unité de membrane osmotique (42, 42a, 42b) au moyen d'une première pompe (P4) interposée entre lesdits deuxièmes moyens de filtrage (44) et ladite au moins une unité de membrane osmotique (42, 42a).
